(19) Europäisches Patentamt
European Patent Office
Office européen des brevets

(11) Publication number: 0 014 211
B1

(12) EUROPEAN PATENT SPECIFICATION

(45) Date of publication of patent specification: 14.03.84

(51) Int. Cl.³: C 08 L 79/04, C 08 L 79/06, C 08 L 79/08

(21) Application number: 79900507.9

(22) Date of filing: 03.05.79

(86) International application number: PCT/US79/00297

(87) International publication number: WO 79/01029 29.11.79 Gazette 79/24

# (54) AROMATIC HETEROCYCLIC POLYMER ALLOYS AND PRODUCTS PRODUCED THEREFROM.

(30) Priority: 03.05.78 US 902525

(43) Date of publication of application: 20.08.80 Bulletin 80/17

(45) Publication of the grant of the patent: 14.03.84 Bulletin 84/11

(84) Designated Contracting States: CH DE FR GB SE

(56) References cited:
GB - A - 1 122 925
US - A - 3 423 483
US - A - 4 108 835

CONTEMPORARY TOPICS IN POLYMER SCIENCE VOL. 2 PUBLISHED 1977 NEW YORK AND LONDON. "PROPERTIES OF RIGID-CHAIN POLYMERS IN DILUTE AND CONCENTRATED SOLUTIONS" GUY C. BERRY. PP 55-92
POLYMER PREPRINTS, VOL. 19 No. 2 PUBLISHED 1978 "THERMALLY STABLE ROD-LIKE POLYMERS:SYNTHESIS OF AN ALL-PARA POLY(BENZOBISTHIAZOLE)" WOLFE ET AL PP 1-7

(73) Proprietor: THE UNITED STATES OF AMERICA represented by the Secretary U.S. Department of Commerce
National Technical Information Service Office of Government Inventions and Patents 5285 Port Royal Road
Springfield, Virginia 22161 (US)

(72) Inventor: HELMINIAK, Thaddeus Edmund
405 Orchard Drive
Dayton, OH 45419 (US)
Inventor: ARNOLD, Fred Elmer
1583 Ambridge Road
Centerville, OH 45459 (US)
Inventor: HUSMAN, George Ervin
1480 Parkman Place
Xenia, OH 45385 (US)
Inventor: BENNER, Charles Leighton
128 Hoak Drive
Fairborn, OH 45324 (US)

(74) Representative: Bull, Michael Alan et al,
Haseltine Lake & Co. Hazlitt House 28
Southampton Buildings Chancery Lane
London WC2A 1AT (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 014 211 B1

Courier Press, Leamington Spa, England.

# Aromatic heterocyclic polymer blends and products produced therefrom

This invention relates to blends of rod-like aromatic heterocyclic polymers and coil-like heterocyclic polymers, and to the preparation of composite films therefrom.

The fibre-reinforced plastics materials, or composites, currently being used in the fabrication of load-bearing structural components are light-weight and durable, but the fabrication of such components involves a complex stepwise procedure. The strength and durability of the fibre-reinforced plastics materials is largely dependent upon the existence of an extensive, long lasting load-transferring, interface between the reinforcing fibres and a matrix of the plastics material. A need exists for high strength plastics materials, or composites, which possess at least the following desirable prerequisites: namely, (1) non-reliance on fibre reinforcement for the attainment of high strength properties; (2) circumvention of the complexities of current composite fabrication procedures; and (3) elimination of fibre-plastics material interface problems.

According to the present invention there is provided a polymeric blend which comprises a mixture of a flexible coil-like heterocyclic polymer and a rod-like aromatic heterocyclic polymer in which the coil-like heterocyclic polymer consists essentially of repeating units having the structural formula:

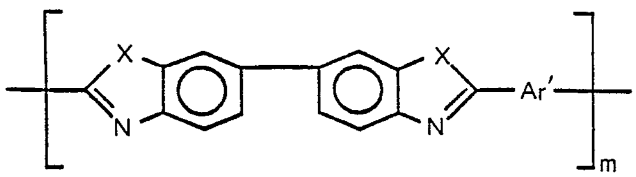 (I)

or

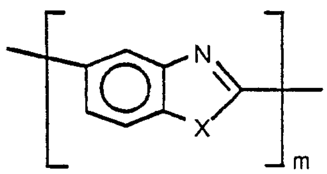 (II)

wherein X is NH, Nϕ, O or S, where ϕ is phenyl, Ar′ is

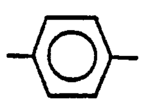 , 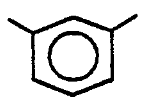 , 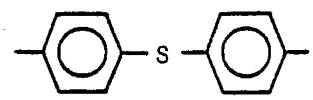 , 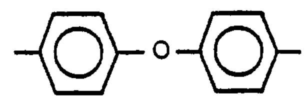 ,

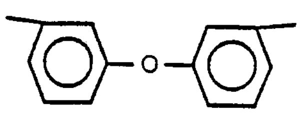 , or 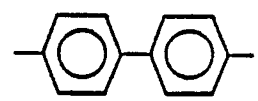 ,

and m is an integer having a value such that the polymer has an intrinsic viscosity of at least 1 dl/g as determined in methanesulphonic acid at 30°C; and the rod-like aromatic heterocyclic polymer consists essentially of repeating units having the structural formula:

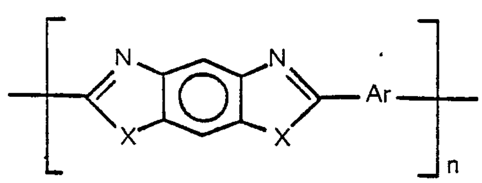 or 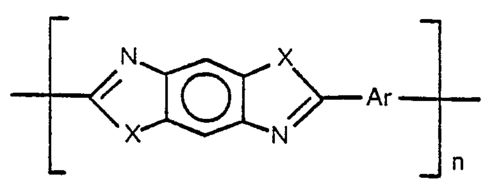

(III) (IV)

wherein X is NR, Nϕ, O or S, where ϕ is phenyl, Ar is

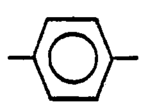 or 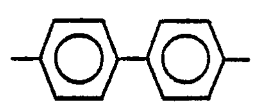

and n is an integer having a value such that the polymer has an intrinsic viscosity of at least 2 dl/g as determined in methanesulphonic acid at 30°C.

The flexible coil-like heterocyclic polymers used in combination with the rod-like polymers have been described in the literature. In the foregoing formulae I and II, m is an integer equal to the number of recurring units and has a value such that the polymers have an intrinsic viscosity of at least 1 dl/g, preferably 2 to 20 inclusive, as determined in methanesulphonic acid at 30°C.

The rod-like aromatic heterocyclic polymers used in the practice of the present invention exhibit 'para' ordered geometry and have alo been described in the literature. In the foregoing formulae III and IV, n is equal to the number of recurring units and has a value such that the polymers have an intrinsic viscosity of at least 2 dl/g, preferably 5 to 30 inclusive, a determined in methanesulphonic acid at 30°C. Examples of other rod-like polymers that can be used include those disclosed in U.S. Patent Specification No. 4,103,835.

It has been discovered that the stiff chain, rod-like aromatic heterocyclic polymers function as a reinforcement in flexible chain, coil-like heterocyclic polymer matrices. As a result, there can thereby be readily fabricated a composite that is analogous to chopped fibre-reinforced composites. The role of the rod-like polymer molecules, individually and in aggregate, is to reinforce the softer, more flexible molecules forming the matrix thereby improving the modulus and tensile strength of the composite mixture. Furthermore, the composite mixture can be induced to exhibit anisotropic properties by causing flow of the polymer mixture. Extensional flow causes the individual and aggregate stiff chain, rod-like polymer molecules to orient in the direction of flow, and as a consequence of the orientation the mechanical properties are vastly improved.

In one embodiment, the invention provides a composite film comprising the coil-like heterocyclic polymer as a matrix and embedded in the matrix a reinforcing amount of the rod-like aromatic heterocyclic polymer. The composite film will generally contain from 5 to 50 weight percent, preferably from 10 to 30 weight percent, of the rod-like polymer.

The present invention also provides a method for fabricating the composite film. Initially, the rod-like polymer and the coil-like polymer are dissolved in the desired relative proportions in methanesulphonic acid. The amounts of the polymers so dissolved are such as to provide a 1 to 30 percent, preferably from 1 to 5 percent, solution of the polymer mixture in the solvent. The polymer solution is then introduced into a mould after which the solvent is removed. Removal of the solvent can be accomplished by any suitable means. In a preferred procedure, the mould is placed in a sublimator which is thermostated at a temperature in the range —20 to —25°C. The sublimator is evacuated continuously with a vacuum pump while the mould is heated at about 50° to 60°C to expedite removal of the methanesulphonic acid solvent. After leaving the solution, the solvent solidifies on the cold surface of the sublimator. The film so formed is then removed from the mould and dried under reduced pressure, e.g. 10 $\mu$mHg (1.33 $N/m^2$) or less, at about 75 to 120°C for a period of from 12 to 36 hours.

In order to optimize the strength properties of the composite mixture, it is often preferred to subject the stiff chain, rod-like reinforcement in the coil-like polymer matrix to uniaxial orientation. This uniaxial orientation of the film can be accomplished by initially allowing residual casting solvent, which acts as a plasticizer, to remain in the polymer mixture constituting the film. The film is then stretched, or elongated, to provide the desired orientation. Elongation of the film can be carried out by well known procedures. In one such procedure, elongation for uniaxial orientation is conveniently conducted with an Instron tensile tester at cross-head speeds ranging from 0.025 to 1.27 cm per minute, preferably at rates ranging from 0.025 to 0.051 cm per minute. During the orientation, the film is elongated or stretched by about 50 to 40 percent of its original length. Preferably, the concentration of residual solvent (plasticizer) in the composite mixture ranges from 1 to 30 weight percent, most preferably about 15 weight percent.

After orientation of the stiff chain, rod-like polymer in the uniaxial direction of the composite mixture, residual solvent is leached from the film by means of a low boiling non-solvent. Examples of non-solvents for the polymers that can be used include aliphatic alcohols and ketones, such as methanol, ethanol, propanol, isopropanol, acetone, and methylethylketone. Leaching of the solvent is carried out at a temperature ranging from room temperature to the reflux temperature of the non-solvent. Removal of the solvent by leaching is generally completed in about 5 to 30 minutes after which the film is recovered and dried to remove any non-solvent.

Even further enhancement of the physical properties of the composite film can be obtained if the leaching of the solvent is conducted while the film is under tension. Thus, the non-solvent is advantageously applied to the surface of the film while under tension during the uniaxial orientation procedure.

The invention has been described primarily as it relates to the manufacture of composite films, but it is to be understood that the polymeric blends of this invention are not limited to use in the fabrication of composite films. For example, mixtures of the rod-like aromatic heterocyclic polymers and the coil-like heterocyclic polymers dissolved methanesulphonic acid can be used as a spinning dope. The as-spun fibres can be elongated by well known methods to produce high strength, high modulus, thermally stable fibres.

For a better understanding of the invention, reference should now be made, by way of example only, to the following Examples.

Example I

A series of runs was conducted in which composite films were prepared in accordance with the present invention. A control run was also carried out in which a film was fabricated which did not contain a rod-like polymer.

The rod-like and coil-like polymers used in the runs have the following formulae:

Rod-like Polymer

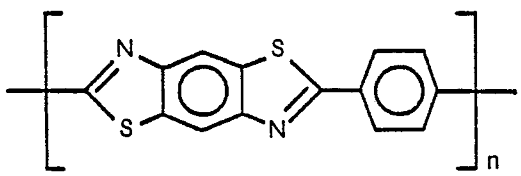

(V)

Coil-like Polymer

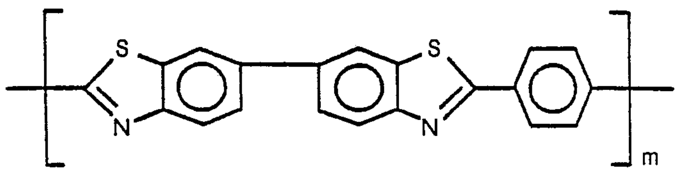

(VI)

One percent solutions containing mixtures of the rod-like polymer (V) with an intrinsic viscosity of 5.07 and the coil-like polymer (VI) with an intrinsic viscosity of 2.38 were prepared in methanesulphonic acid. In each run 10 millilitres of the solution were pipetted into a flat bottom film casting dish. The dish was then placed in a sublimator thermostated at 24°C. The sublimator was evacuated with a vacuum pump and heated at 50 to 60°C to hasten the removal of the methanesulphonic acid. After the films had formed, they were dried at 100°C for 24 hours under reduced pressure (10 $\mu$mHg, i.e. 1.33 $N/m^2$, or less). The films were cut into 0.64 cm strips and broken in an Instron tensile tester. The amounts of polymers used and the results obtained in the tests are shown below in Table 1.

TABLE 1

| Rod (V) (wt%) | Coil (VI) (wt%) | Tensile ($kN/m^2$) | Improvement (%) | Modulus $\times 10^5$ ($kN/m^2$) | Improvement (%) |
|---|---|---|---|---|---|
| — | 100 | 18609 | — | 13.24 | — |
| 25 | 75 | 58013 | 211 | 33.78 | 155 |
| 50 | 50 | 24684 | 33 | 17.86 | 35 |
| 75 | 25 | 27834 | 50 | 19.03 | 44 |

Example II

A series of runs were carried out in which composite films were prepared in accordance with the present invention and then subjected to uniaxial orientation. As in Example I, a control run was included.

The rod-like and coil-like polymers used in the runs have the following formulae:

Rod-like polymer

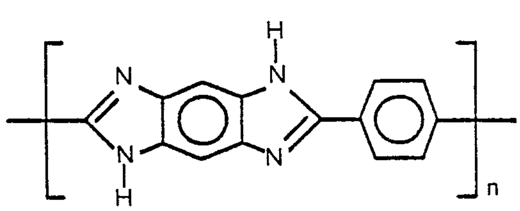

(VII)

Coil-like polymer

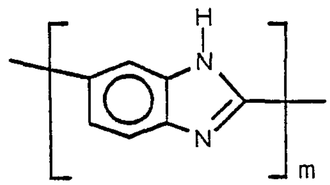

(VIII)

One percent solutions containing mixtures of the rod-like polymer (VII) with an intrinsic viscosity of 2.64 and the coil-like polymer (VIII) with an intrinsic viscosity of 18.0 were prepared in methanesulphonic acid. In each run, 10 millilitres of the mixture was pipetted into a flat bottom casting dish after which the dish was placed in a sublimator thermostated at −24°C. The sublimator was evacuated continuously with a vacuum pump and heated at 50 to 60°C to hasten the removal of the methanesulphonic acid. After the films had formed, they were dried at 100°C under reduced pressure (10 $\mu$mHg, i.e. 1.33 N/$m^2$) to provide films with an acid content (residual plasticizor) of about 15 weight percent. The films were cut into 0.64 cm strips and broken in an Instron tensile tester. The amounts of polymers contained in the films and the test results are shown below in Table II.

TABLE II

| Rod (VII) (wt%) | Coil (VIII) (wt%) | Tensile (kN/$m^2$) | Improvement (%) | Modulus x $10^5$ (kN/$m^2$) | Improvement (%) |
|---|---|---|---|---|---|
| — | 100 | 100663 | — | 13.79 | — |
| 10 | 90 | 123995 | 23 | 56.54 | 310 |
| 20 | 80 | 85440 | — | 35.65 | 158 |

Example III

Film specimens prepared as described in Example II and having an acid content (residual plasticizor) of about 15 weight percent were subjected to uniaxial orientation. Thus, the specimens were elongated in an Instron tensile tester at a crosshead speed of 0.05 cm per minute. Thereafter, the oriented film specimens were broken in the tester. The amounts of polymers contained in the film composites and the test results are shown below in Table III.

TABLE III

| Coil (VII) (wt%) | Rod (VIII) (wt%) | Tensile (kN/$m^2$) | Improvement (%) | Modulus x $10^5$ (kN/$m^2$) | Improvement (%) |
|---|---|---|---|---|---|
| — | 100 | 142928 | — | 21.86 | — |
| 10 | 90 | 276425 | 93 | 92.39 | 323 |
| 20 | 80 | 162089 | 13.4 | 43.02 | 97 |

Example IV

Film specimens prepared as described in Example II and having an acid content (residual plasticizer) of about 15 weight percent were subjected to uniaxial orientation as described in Example III. While the film specimens were under tension in the Instron tester, methanol was applied to their outer surfaces in order to leach out the residual solvent in the films. Thereafter, the oriented film specimens were broken in the Instron tester. The amounts of polymers contained in the film composites and the test results are set forth below in Table IV.

TABLE IV

| Rod (VII) (wt%) | Coil (VIII) (wt%) | Tensile (kN/m²) | Improvement (%) | Modulus x $10^5$ (kN/m²) | Improvement (%) |
|---|---|---|---|---|---|
| — | 100 | 142928 | — | 21.86 | — |
| 10 | 90 | 368870 | 154 | 97.22 | 345 |
| 20 | 80 | 275790 | 93 | 71.02 | 225 |
| 30 | 70 | 241317 | 69 | 88.25 | 304 |

As may be seen from the data in the foregoing Examples, the present invention provides high strength reinforced composites based on the formation of polymer blends. Thus, instead of adding reinforcing fibres to a plastics material in the conventional manner, strength is obtained as a result of molecular orientation of polymer chains within the plastic matrix itself. The improvement in physical properties obtained by uniaxial orientation is demonstrated by the data shown in Table III although, as seen from the data in Table II, the non-oriented film composites containing residual acid plasticizer possess relatively good properties. However, when the residual plasticizer is leached from the oriented film composite while under tension, the properties of the film composites are further enhanced by an unexpected degree as seen from the data in Table IV.

From the foregoing description, it may be also seen that the present invention provides a simplified procedure for fabricating composites. Thus, the procedure eliminates many of the complexities currently encountered in using fibres to reinforce plastic matrices. Also, the present composites are not subject to the fibre-plastic interface problems as are conventional fibre-reinforced plastics.

**Claims**

1. A polymeric blend which comprises a mixture of a flexible coil-like heterocyclic polymer and a rod-like aromatic heterocyclic polymer in which the coil-like heterocyclic polymer consists essentially of repeating units having the structural formula:

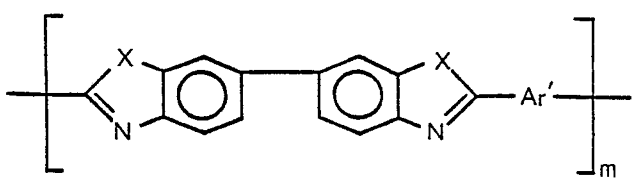

or

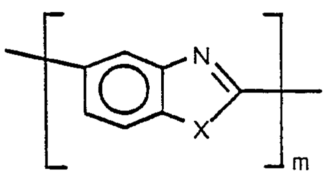

wherein X is NH, N$\phi$, O or S, where $\phi$ is phenyl, Ar′ is

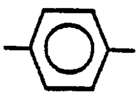

,

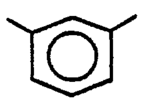

,

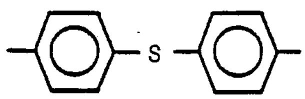

,

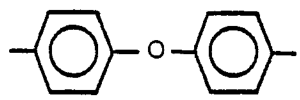

,

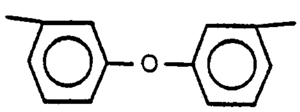

, or

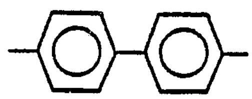

,

and m is an integer having a value such that the polymer has an intrinsic viscosity of at least 1 dl/g as determined in methanesulphonic acid at 30°C; and the rod-like aromatic heterocyclic polymer consists essentially of repeating units having the structural formula:

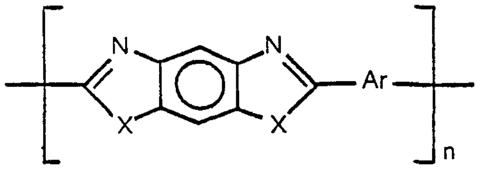
or
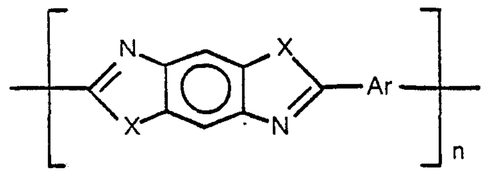

wherein X is NR, Nϕ, O or S, where ϕ is phenyl, Ar is

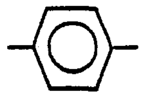
or
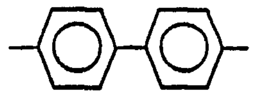

and n is an integer having a value such that the polymer has an intrinsic viscosity of at least 2 dl/g as determined in methanesulphonic acid at 30°C.

2. A polymeric blend as claimed in Claim 1 characterised in that the mixture contains from 5 to 50 weight percent of the rod-like aromatic heterocyclic polymer.

3. A polymeric blend as claimed in Claim 1 or 2, characterised in that the coil-like polymer consists essentially of repeating units having the structural formula:

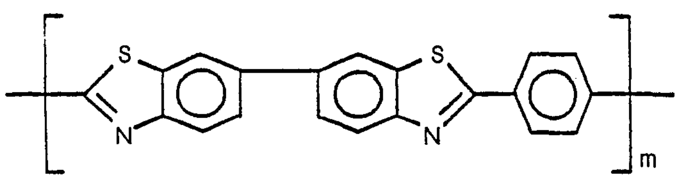

and in that the rod-like aromatic heterocyclic polymer consists essentially of repeating units having the structural formula:

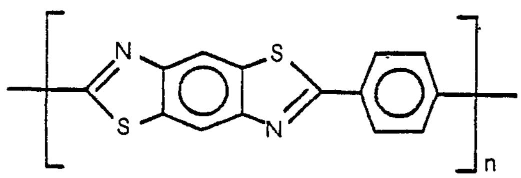

4. A polymeric blend as claimed in Claim 1 or 2, characterised in that the coil-like heterocyclic polymer consists essentially of repeating units having the structural formula:

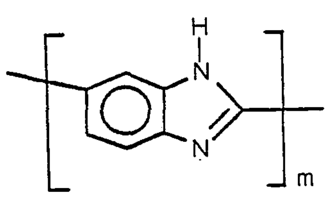

and in that the rod-like aromatic heterocyclic polymer consists essentially of repeating units having the structural formula:

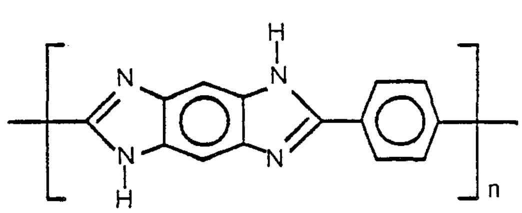

5. A polymeric blend as claimed in any one of Claims 1 to 4, characterised in that the coil-like heterocyclic polymer has an intrinsic viscosity in the range of from 2 to 20 dl/g as determined in methanesulphonic acid at 30°C.

6. A polymeric blend as claimed in any one of Claims 1 to 5, characterised in that the rod-like aromatic heterocyclic polymer has an intrinsic viscosity in the range of from 5 to 30 dl/g as determined in methanesulphonic acid at 30°C.

7. A composite film comprising, as a matrix, a flexible, coil-like heterocyclic polymer as defined in Claim 1, 3, 4 or 5, and, embedded in the matrix, a reinforcing amount of a rod-like aromatic heterocyclic polymer as defined in Claim 1, 3, 4 or 6.

8. A composite film as claimed in Claim 7, characterised in that the film contains from 5 to 50 weight percent of the rod-like polymer.

9. A composite film as claimed in Claim 7 or 8, characterised in that the polymer chains of the rod-like aromatic heterocyclic polymer are uniaxially oriented.

10. A method of preparing a composite film which method comprises the steps of:

a) dissolving in methanesulphonic acid a mixture of a flexible coil-like heterocyclic polymer as defined in Claim 1, 3, 4 or 5 and a rod-like aromatic heterocyclic polymer as defined in Claim 1, 3, 4 or 6, the amounts of the polymers dissolved being sufficient to provide a solution containing from 1 to 30 percent of the mixture of polymers in the solvent and being such that the polymer mixture contains from 5 to 50 weight percent of the rod-like polymer;

b) introducing the polymer solution obtained in step a) into a casting mould;

c) removing solvent from the polymer solution thereby forming a composite film in the mould;

d) recovering the composite film from the mould; and

e) drying the recovered composite film.

11. A method according to Claim 10 characterised in that the amount of solvent removed from the polymer solution in step c) is such that residual solvent remains in the composite film, the concentration of the solvent being 1 to 30 weight percent; in that the composite film containing residual solvent after being recovered from the mould is elongated thereby subjecting polymer chains of the rod-like polymer to uniaxial orientation; and in that the residual solvent is leached from the uniaxially orientated composite film by contacting same with a non-solvent for the polymers.

12. A method according to Claim 11 characterised in that the residual solvent is leached from the composite film by applying the non-solvent to the film while it is under tension during uniaxial orientation.

**Patentansprüche**

1. Polymermischung, gekennzeichnet durch eine Mischung von einem flexiblen spiralähnlichen heterocyclischen Polymer und einem stabähnlichen aromatischen heterocyclischen Polymer, worin das spiralähnliche heterocyclische Polymer im wesentlichen aus wiederkehrenden Einheiten der Formeln:

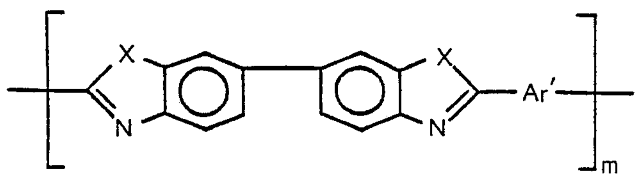

oder

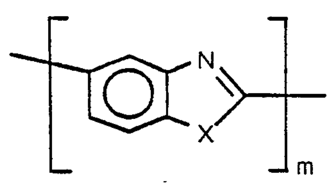

worin

X NH, N$\phi$, O oder S bedeutet, wobei $\phi$ Phenyl ist,

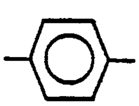 , 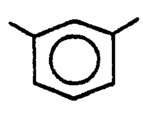 , 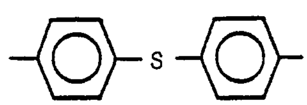 , 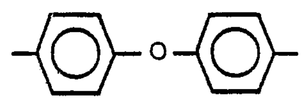 ,

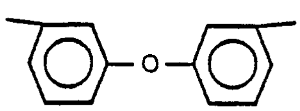 , oder 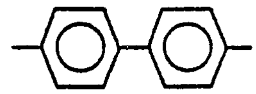 ,

bedeutet und

m eine ganze Zahl solcher Grösse ist, dass das Polymer eine Intrinsic-Viskosität von mindestens 1 dl/g — bestimmt in Methansulfonsäure bei 30°C — aufweist, und das stabähnliche aromatische heterocyclische Polymer im wesentlichen aus wiederkehrenden Einheiten der Formeln:

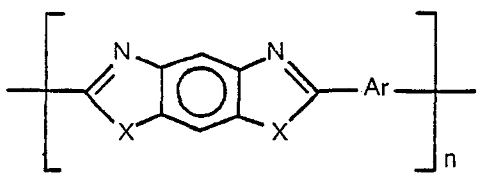

oder

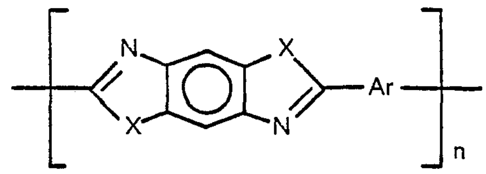

worin

X NR, Nϕ, O oder S bedeutet, wobei ϕ Phenyl ist,

Ar

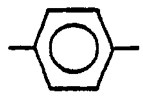

oder

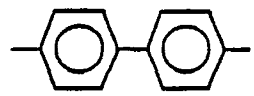

bedeutet und

n eine ganze Zahl solcher Grösse ist, dass das Polymer eine Intrinsic-Viskosität von mindestens 2 dl/g — bestimmt in Methansulfonsäure bei 30°C — aufweist, besteht.

2. Polymermischung nach Anspruch 1, dadurch gekennzeichnet, dass die Mischung 5 bis 50 Gew% an stabähnlichem aromatischem heterocyclischem Polymer enthält.

3. Polymermischung nach Anspruch 1 oder 2, dadurch gekennzeichnet, dass das spiralähnliche Polymer im wesentlichen aus wiederkehrenden Einheiten der Formel:

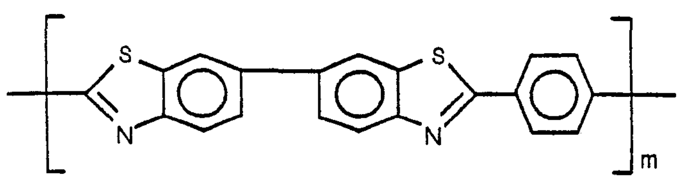

und das stabähnliche aromatische heterocyclische Polymer im wesentlichen aus wiederkehrenden Einheiten der Formel:

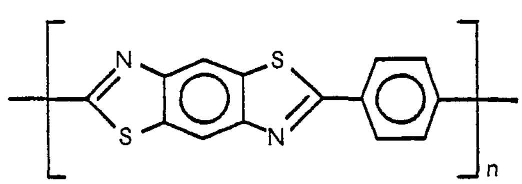

besteht.

4. Polymermischung nach Anspruch 1 oder 2, dadurch gekennzeichnet, dass das spiralähnliche heterocyclische Polymer im wesentlichen aus wiederkehrenden Einheiten der Formel:

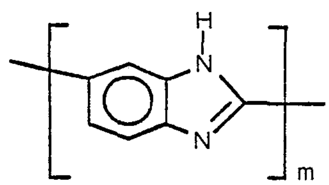

und das stabähnliche aromatische heterocyclische Polymer im wesentlichen aus wiederkehrenden Einheiten der Formel:

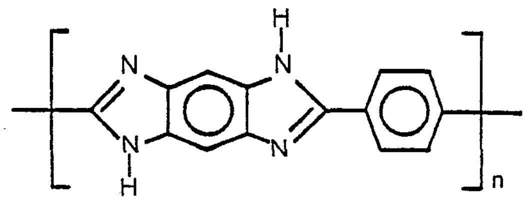

besteht.

5. Polymermischung nach einem der Ansprüche 1 bis 4, dadurch gekennzeichnet, dass das spiralähnliche heterocyclische Polymer eine Intrinsic-Viskosität im Bereich von 2 bis 20 dl/g — bestimmt in Methansulfonsäure bei 30°C — aufweist.

6. Polymermischung nach einem der Ansprüche 1 bis 5, dadurch gekennzeichnet, dass das stabähnliche aromatische heterocyclische Polymer eine Intrinsic-Viskosität im Bereich von 5 bis 30 dl/g — bestimmit in Methansulfonsäure bei 30°C — aufweist.

7. Composite-Film, dadurch gekennzeichnet, dass er als Matrix ein flexibles spiralähnliches heterocyclisches Polymer gemäss Anspruch 1, 3, 4 oder 5 und, eingebettet in der Matrix, eine verstärkend wirkende Menge eines stabähnlichen aromatischen heterocyclischen Polymers gemäss Anspruch 1, 3, 4 oder 6 enthält.

8. Composite-Film nach Anspruch 7, dadurch gekennzeichnet, dass der Film 5 bis 50 Gew% stabähnliches Polymer enthält.

9. Composite-Film nach Anspruch 7 oder 8, dadurch gekennzeichnet, dass die Polymerketten des stabähnlichen aromatischen heterocyclischen Polymers in uniaxialer Orientierung vorliegen.

10. Verfahren zur Herstellung eines Composite-Films, dadurch gekennzeichnet, dass

a) eine Mischung von einem flexiblen spiralähnlichen heterocyclischen Polymer gemäss Anspruch 1, 3, 4 oder 5 und einem stabähnlichen aromatischen heterocyclischen Polymer gemäss Anspruch 1, 3, 4 oder 6 in Methansulfonsäure gelöst wird, wobei die Polymeren in solchen Mengen verwendet werden, dass die erhaltene Lösung 1 bis 30% der Polymermischung und die Polymermischung 5 bis 50 Gew% des stabähnlichen Polymers enthält,

b) die in Stufe a) erhaltene Polymerlösung in eine Giessform eingeführt,

c) das Lösungsmittel aus der Polymerlösung entfernt wird, wobei sich ein Composite-Film in der Form bildet,

d) der Composite-Film aus der Form entfernt und

e) getrocknet wird.

11. Verfahren nach Anspruch 10, dadurch gekennzeichnet, dass in Stufe c) das Lösungsmittel nur so weit entfernt wird, dass in dem Composite-Film 1 bis 30 Gew% Rest-lösungsmittel zurückbleiben, der so erhaltene Composite-Film, nach der Entfernung aus der Form, gedehnt wird, wobei die Polymerketten des stabähnlichen Polymers in uniaxiale Orientierung gebracht werden, und der so erhaltene uniaxial orientierte Composite-Film von dem Rest-lösungsmittel durch Behandlung mit einem Nicht-löser für die Polymeren befreit wird.

12. Verfahren nach Anspruch 11, dadurch gekennzeichnet, dass zur Entfernung des Rest-lösungsmittels aus dem Composite-Film der während der uniaxialen Orientierung unter Spannung befindliche Film der Behandlung mit einem Nicht-löser unterworfen wird.

**Revendications**

1. Mélange polymère qui comprend un mélange d'un polymère hétérocyclique flexible en hélice et d'un polymère hétérocyclique aromatique fibreux, dans lequel le polymère hétérocyclique en hélice est constitué essentiellement de motifs répondant à la formule développée:

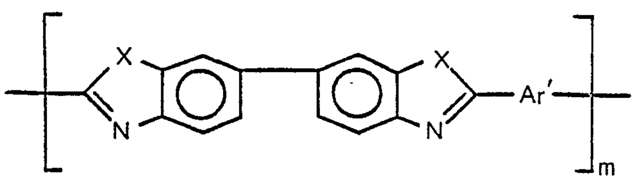

ou

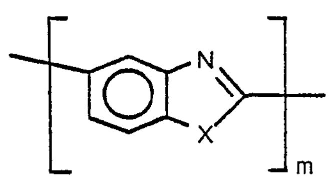

dans laquelle X est NH, Nϕ, O ou S, où ϕ est un phényle, Ar' est:

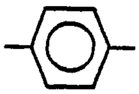 , 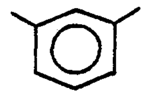 , 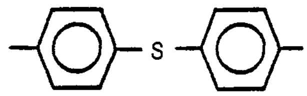 , 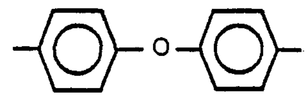 ,

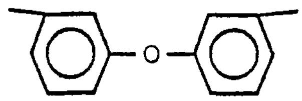 , ou 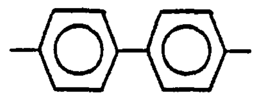 ,

et m est un nombre entier ayant une valeur telle que le polymère ait une viscosité intrinsèque d'au moins 1 dl/g comme déterminée dans l'acide méthane sulfonique à 30°C, et le polymère hétérocyclique aromatique fibreux est constitué essentiellement de motifs répondant à la formule développée:

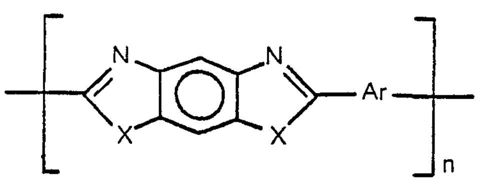 ou 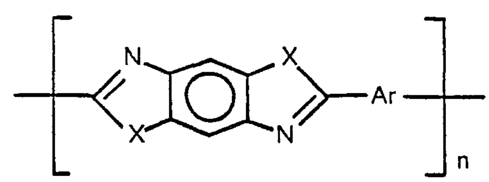

dans laquelle X est NR, Nϕ, O ou S, où ϕ est un phényle, Ar est:

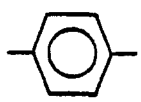 ou 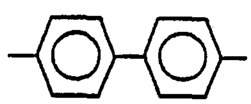

et n est un nombre entier ayant une valeur telle que le polymère ait une viscosité intrinsèque d'au moins 2 dl/g comme déterminée dans l'acide méthane sulfonique à 30°C.

2. Mélange polymère selon la revendication 1, caractérisé en ce que le mélange contient de 5 à 50% en poids du polymère hétérocyclique aromatique fibreux.

3. Mélange polymère selon l'une quelconque des revendications 1 ou 2, caractérisé en ce que le polymère en hélice est constitué essentiellement de motifs répondant à la formule développée:

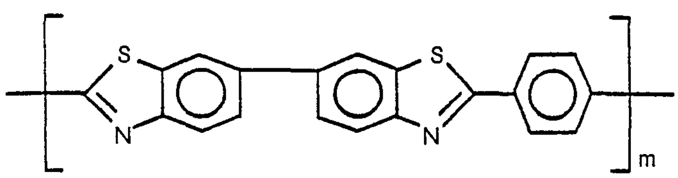

et en ce que le polymère hétérocyclique aromatique fibreux est constitué essentiellement de motifs répondant à la formule développée:

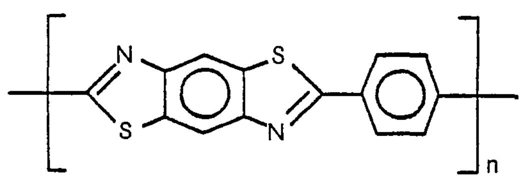

4. Mélange polymère selon l'une quelconque des revendications 1 ou 2, caractérisé en ce que le polymère hétérocyclique en hélice est constitué essentiellement de motifs répondant à la formule développée:

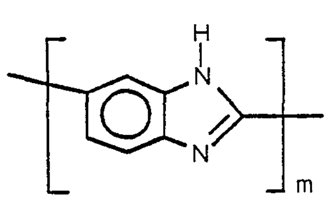

et en ce que le polymère hétérocyclique aromatique fibreux est constitué essentiellement de motifs répondant à la formule développée:

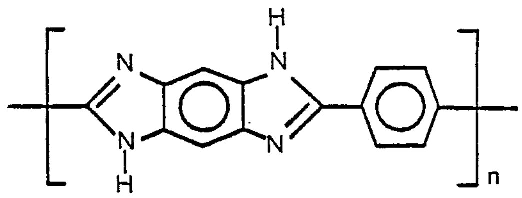

5. Mélange polymère selon l'une quelconque des revendications 1 à 4, caractérisé en ce que le polymère hétérocyclique en hélice a une viscosité intrinsèque dans la gamme de 2 à 20 dl/g comme déterminée dans l'acide méthane sulfonique à 30°C.

6. Mélange polymère selon l'une quelconque des revendications 1 à 5, caractérisé en ce que le polymère hétérocyclique aromatique fibreux a une viscosité intrinsèque dans la gamme de 5 à 30 dl/g comme déterminée dans l'acide méthane sulfonique à 30°C.

7. Pellicule composite comprenant, comme matrice, un polymère hétérocyclique flexible en hélice selon l'une des revendications 1, 3, 4 ou 5, et, incorporée à la matrice, une quantité de renforcement d'un polymère hétérocyclique aromatique fibreux selon l'une des revendications 1, 3, 4 ou 6.

8. Pellicule composite selon la revendication 7, caractérisée en ce que la pellicule contient de 5 à 50% en poids du polymère fibreux.

9. Pellicule composite selon l'une quelconque des revendications 7 ou 8, caractérisée en ce que les chaînes polymères du polymère hétérocyclique aromatique fibreux ont une orientation uniaxiale.

10. Procédé de préparation d'une pellicule composite, comprenant les stades de:

a) dissolution dans l'acide méthane sulfonique d'un mélange d'une polymère hétérocyclique flexible en hélice comme défini dans les revendications 1, 3, 4 ou 5 et d'un polymère hétérocyclique aromatique fibreux comme défini dans les revendications 1, 3, 4 ou 6, les quantités des polymères dissous étant suffisantes pour fournir une solution contenant de 1 à 30% du mélange des polymères dans le solvant et étant telles que le mélange des polymères contienne de 5 à 50% en poids du polymère fibreux;

b) introduction de la solution de polymères ainsi obtenue dans le stade a) dans un moule de coulées;

c) élimination du solvant de la solution de polymères pour former ainsi une pellicule composite dans le moule;

d) récupération de la pellicule composite à partir du moule; et

e) séchage de la pellicule composite récupérée.

11. Procédé selon la revendication 10, caractérisé en ce que la quantité de solvant éliminée de la solution de polymères dans le stade c) est telle que du solvant résiduel demeure dans la pellicule composite, la concentration du solvant étant de 1 à 30% en poids; en ce que la pellicule composite contenant du solvant résiduel après avoir été récupérée à partir du moule est allongée pour soumettre les chaînes polymères du polymère fibreux à une orientation uniaxiale; et en ce que le solvant résiduel est lixivié à partir de la pellicule composite à orientation uniaxiale par contact de celle-ci avec un non-solvant des polymères.

12. Procédé selon la revendication 11, caractérisé en ce que le solvant résiduel est lixivié à partir de la pellicule composite par application du non-solvant à la pellicule alors qu'elle est sous tension pendant l'orientation uniaxiale.